(19) Europäisches Patentamt
European Patent Office
Office européen des brevets

(11) Publication number: **0 084 578**
**A1**

(12) # EUROPEAN PATENT APPLICATION

(21) Application number: **82100457.9**

(22) Date of filing: **23.01.82**

(51) Int. Cl.³: **C 08 G 63/68**, C 08 G 63/62

(43) Date of publication of application: **03.08.83**
**Bulletin 83/31**

(84) Designated Contracting States: **DE FR GB IT NL**

(71) Applicant: **Mobay Chemical Corporation, Penn Lincoln Parkway West, Pittsburgh, Pennsylvania 15205 (US)**

(72) Inventor: **Krishnan, Sivaram, Sachsenstrasse 12, D-4130 Moers (DE)**
Inventor: **Baron, Arthur L., 211 East Thistle Court, New Martinsville, West Virginia 261555 (US)**

(74) Representative: **Gremm, Joachim, Dr. et al, Bayer AG c/o Zentralbereich Patente, Marken und Lizenzen, D-5090 Leverkusen 1, Bayerwerk (DE)**

(54) **Copolycarbonates having high melt flow rates.**

(57) The invention is directed to copolycarbonates of thiodiphenol characterized by high melt flow rate and good mechanical properties, particularly suitable for molding at temperatures lower than 500°F.

**EP 0 084 578 A1**

0084578

MOBAY Chemical Corporation

Copolycarbonates having high melt flow rates

Polycarbonates based on dihydroxy-diaryl-thioether are known in the art.

In the US-PS 3,250,744 (Ue 1771 and Ue 1774) copolycarbonates having a content of between 20 and 100 mole-%, based on the total molar amount of diphenoxy radicals, of thio-diphenoxy radicals derived from dihydroxy-diphenyl-thioethers are incorporated. The description does not specify the molecular weights of the high molecular polycarbonates but only states that these high molecular weight polycarbonates melt at temperatures above 200°C.

In the Examples of US-PS 3,250,744 polycarbonates from 100 mole-% bis-(4-hydroxyphenyl)-sulfide (Example 3), bis-(4-hydroxy-3-methyl-phenyl)-sulfide (Example 5) and from 50 mole-% bis-(4-hydroxyphenyl)-sulfide (Example 4) are mentioned. The molecular weights ($\bar{M}w$, weight average) of the corresponding polycarbonates obtained in the Examples 3 to 5 of US-Patent 3,250,744 can be between 20,000 and 50,000, presumably are in excess of 30,000.

US-Patent 3,023,101 provides no information over the teaching of US-Patent 3,250,744. US-Patent 3,398,212 describes high molecular weight copolycarbonates containing at least 10 mole percent of at least one polycyclic gem-bisphenol having a saturated polycyclic three-dimensional structure and from 2 to 50 mole percent of at least one thiodiphenol said polycarbonates have an inherent viscosity of at least 0.4 as measured in chloroform which corresponds to a molecular weight ($\bar{M}w$) of 25,000.

It is also known to prepare crystalline bisphenol-s-copolycarbonates of low molecular weights (compare "Smirnova, Polycarbonates and mixed Polycarbonates based on di-(4-hydroxyphenyl)-sulphide, Translation of "Vysokomol. soyed. A 10, No. 1, pages 96 to 101, 1968", pages 111 to 118).

The copolycarbonates prepared in the Examples have a specific viscosity of 0.16 (maximum), of 0.17 (maximum) 0.07 (maximum) (page 113 of the translation) which correspond to $\eta$ rel of 1.16, 1.17, 1.07 respectively which correspond to molecular weights ($\bar{M}w$, weight average) of less than 10,000.

According to DE-OS 2,721,595 (Mo-1607) thiobisphenol-copolycarbonates are described having 2 to 15 Mol % thiobisphenol-carbonate units. The molecular weights ($\bar{M}w$, weight average) are between 10,000 and 200,000.

The molecular weights ($\bar{M}w$) of the polycarbonates actually prepared in the Examples are all above 30,000 including those of the comparison Example containing 20 mole-% of thiobisphenol-carbonate units.

According to the Canadian Patent 1,094,738 (Mo 1607-Can) thio-bisphenol-copolycarbonates are described having up to 20 mole percent of thiobisphenol-carbonate units. The weight average molecular weights thereof are between 10,000 and 200,000. Again the weight average molecular weights ($\bar{M}w$) of the Examples are all above 30,000.

According to US-Patent 4,174,359 (Mo-1768-US-CIP) thiobisphenol-copolycarbonates are described having

molecular weights of between 10,000 and 200,000, preferably between 20,000 and 80,000, and thiobisphenol-carbonate units in amounts of between 2 and 50 mole-%, preferably 5 to 40 mole-%.

In the Examples (A) to (D) of US-Patent 4,174,359 the contents of the thiobisphenol-carbonate units are 40 mole-%, 30 mole-%, 20 mole-% and 15 mole-%. But the melt indices thereof are far below those polycarbonates having weight average molecular weights ($\bar{M}w$) of less than 30,000.

According to US-PS 4,043,980 (Mo-1609-US) halogenated thiobisphenol-copolycarbonates are known, the molecular weights thereof ($\bar{M}w$) are between 10,000 and 200,000.

The subject of instant invention are thiobisphenol-copolycarbonates having weight average molecular weights ($\bar{M}w$) between 18,000 and 22,000 and thiobisphenoxy-carbonate units in amounts between 15 mole-% to 35 mole-%, preferably between 20 mole-% to 30 mole-%, referred to the total molar amount of bisphenoxy-carbonate units, characterized in that they consist of thiobisphenoxy-carbonate units of the following formula (I)

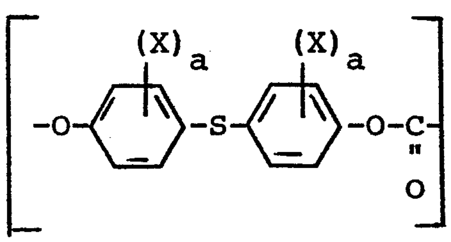

(I)

wherein X is H or $C_1$-$C_4$-alkyl and a is a number of zero to 2, and other diphenoxy-carbonate units of the following formula (II),

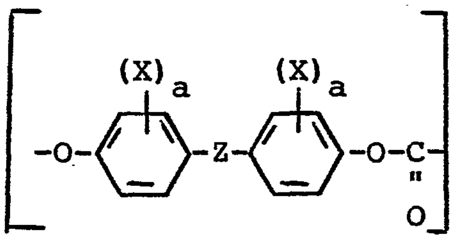

(II)

wherein X and a have the same meaning as in formula (I) and Z is a $C_1$-$C_5$-alkylene, $C_2$-$C_5$-alkylidene, cyclohexylene, cyclohexylidene.

For both formulae (I) and (II) X is preferably H or $CH_3$, and Z preferably methylene, isopropylidene and cyclohexylidene,

Most preferably in both formulae (I) and (II) X is H and Z isopropylidene.

The copolycarbonates of the instant invention are terminated as usual by phenoxy-radicals derived from phenol or alkyl-substituted or halogen-substituted phenols, as known in prior art.

The amount of monofunctional chain stopper used depends on the molecular weight of the copolycarbonate to be achieved. Between 3 mole-% and 5 mole-%, referred to the amount of diphenoxy-carbonate units present in the molecule, are chosen.

The copolycarbonates can be prepared according to the well known interfacial polycondensation process using phosgene, mixture of aqueous alkaline phase and organic phase consisting of aliphatic hydrocarbons and/or aromatic hydrocarbons, aliphatic tertiary amines as catalysts, reaction temperatures between 15°C and

35°C, reaction times between 15 and 45 min. and pH-values between 11,5 and 13.5.

The mole ratio of phosgene to dihydroxymonomer is between (1,1-1,2):1 = phosgene:dihydroxymonomer.

The aqueous alkaline phase consists e.g. of an aqueous sodium hydroxide solution, the organic phase consists e.g. of $CH_2Cl_2$ and/or chlorobenzene, and the aliphatic tertiary amine consists of triethylamine or N-ethyl-piperidine.

The two-phase boundary process is generally described in detail e.g. in "Schnell, Chemistry and Physics of polycarbonates, 1964, Interscience Publishers, New York", or e.g. in US-Patent 3,028,365.

The thiobisphenols of the formula (Ia)

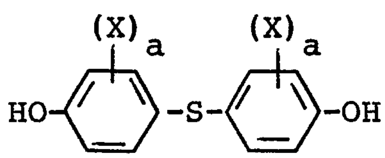

(Ia)

wherein the meaning for X and a are the same as for formula (I) are used in amounts between 15 mole-% and 35 mole-%, preferably between 20 mole-% and 30 mole-%, referred to the total sum of diphenols according to formulae (Ia) and (IIa).

The other diphenols of the formula (IIa)

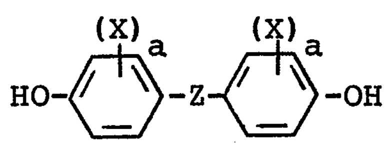

(IIa)

wherein the meaning for X, a and Z are the same as for formula (II) are subsequently used in amounts between

85 mole-% and 65 mole-%, preferably between 80 mole-% and 70 mole-%, referred to the total sum of diphenols according to formulae (Ia) and (IIa).

Suitable thiobisphenols according to formula (Ia) are

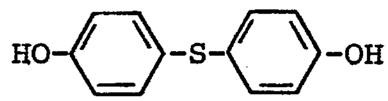

,

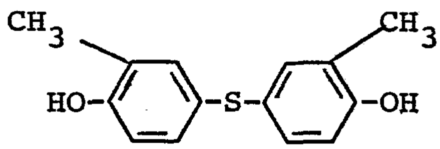

,

or

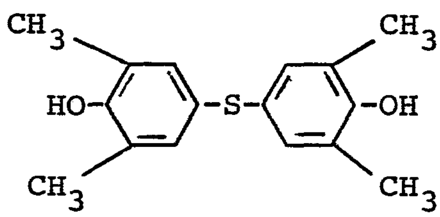

;

suitable other diphenols according to formula (IIa) are

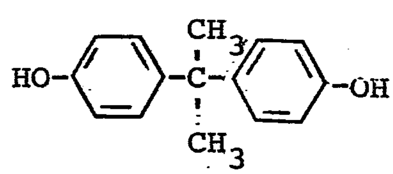

,

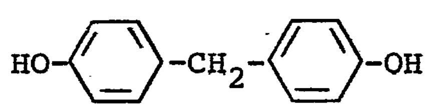

,

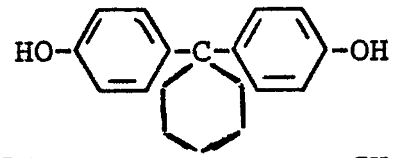 ,

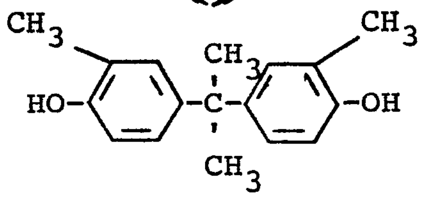

or 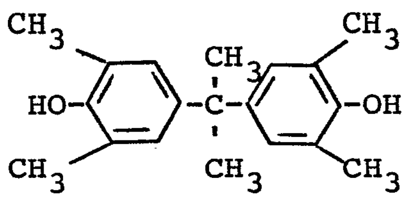 .

Suitable monofunctional chain stoppers are phenol, p-alkyl substituted phenol such as p-tertiarybutyl phenol, p-isooctyl phenol.

The copolycarbonates of the instant invention can be obtained from the two phase reaction medium in known manner by separating the phases, neutralizing, washing etc. and finally evaporating the organic solvent or precipitating the solid polycarbonate from the organic dried solution.

The copolycarbonates of instant invention have a combination of good properties like easy processability and excellent mechnical physical properties.

Because of the inherent high viscosity of commercial polycarbonates their processing, i.e., molding, is carried out at temperatures higher than 600°F = 316°C. Molds having complicated pattern or ones having thin

cavities present particular difficulties because the resin often stops its flow before completely filling the mold and the operator electing to overcome this problem by raising the process temperature runs the risk of thermally degrading the resin.

The present invention offers an attractive solution in that the desirable properties of high molecular weight polycarbonates are made available in the form of a low molecular weight resin which is moldable at less than 500°F = 260°C and preferably lower than 485°F = 251°C. Thin, 20 mils = 0.5 mm, and as low as 5 mils = 0,13 mm or less, and complicated parts can now be molded at sufficiently low temperatures thus avoiding the risk of thermal degradation.

The result of instant invention is contrary to the teaching of GB-PS 1,368,338 (Le A 13 673-GB) wherein good flow properties of low molecular weight polycarbonates can only be obtained via branching. The polycarbonates of the invention can be formed into shaped articles, test specimen, films etc. There can be added stabilizing and fillers. These stabilizers can be thermostabilizers UV stabilizers. The fillers can be glass fibers, mineral fillers like Talcum.

The copolycarbonates according to the instant invention can be used for moldings thin parts of Telephone F10 Connectors and for Video discs.

The following Examples explain the invention in detail:

Example 1

A copolycarbonate resin was prepared by reacting a mixture of the disodium salts of bis-2-(4-hydroxyphenyl)-propane (bisphenol-A) and 4,4'-thiodiphenol with phosgene in accordance with the interfacial polycondensation synthesis hereinbefore discussed. The weight percent ratio of bisphenol-A to 4,4'-thiodiphenol was 3 to 1. The copolycarbonate was tested for physical and mechanical properties with the test results reported in Table I.

Example 2

Example 1 was repeated except that the weight percent ratio of bisphenol-A to 4,4'-thiodiphenol was 7 to 3. The copolycarbonates were tested for physical and mechanical properties with the test results reported in Table I.

Comparison

Example 1 was repeated expect that the weight percent ratio of bisphenol-A to 4,4'-thiodiphenol was 6 to 4. The copolycarbonates were tested for physical and mechanical properties with the test results reported in Table I.

## T A B L E I

| Example No. | 1 | 2 | Comparison | Control[b] | Control[b] |
|---|---|---|---|---|---|
| Wt % TDP[(a)] | 25 | 30 | 40 | 0 | 0 |
| Melt flow rate[(c)] g/10 min. | 24,9 | 24,2 | 29 | 2,9 | 27 |
| Notched Izod Impact[(d)] ft.-lb./in. | | | | | |
| 1/8" molded at 550°F | 10,97 | 10,99 | 10,5 | 18 | 11,2 |
| 1/8" molded at 700°F | 11,26 | | | | |
| 1/4" molded at 550°C | 3,71 | 11,12 | 8,7 | 2,8 | 1,8 |
| Critical thickness, mils (e) | 235 | 255 | 255 | 225 | 130 |
| Dart drop (ft.lbs) | 107 | 107 | 107 | 107 | 107 |
| Heat-distortion temperature °C, at 264 psi | 129,4 | 127 | 123 | 136 | 128 |

(a) TDP = 4,4'-Thiodiphenol

(b) Control is a bisphenol A homopolycarbonate

(c) ASTM D-1238 at 300°C

(d) ASTM D-256

(e) one inch diameter dart, weighes 10 lbs., specimen thickness 0.1"

What is claimed is:

1. Thiobisphenol-copolycarbonates having weight average molecular weights ($\bar{M}w$) between 18,000 and 22,000 and thio-bisphenoxy-carbonate units in amounts between 15 mole-% and 35 mole-%, referred to the total molar amount of bisphenoxy-carbonate units, characterized in that they consist of thiobisphenoxy-carbonate units of the following formula (I)

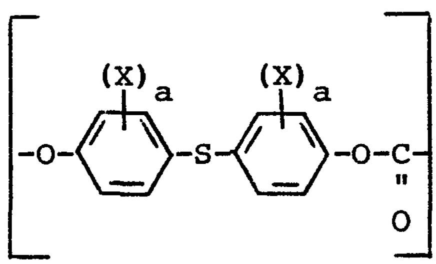

(I)

wherein X is H or $C_1$-$C_4$-alkyl and a is a number of zero to 2, and other diphenoxy-carbonate units of the following formula (II)

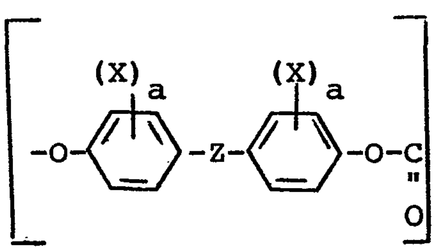

(II)

wherein X and a have the meaning of formula (I) and Z is a $C_1$-$C_5$-alkylene, $C_2$-$C_5$-alkylidene, cyclohexane or cyclohexylidene.

2. Thiobisphenol-copolycarbonates according to claim 1, wherein in formulae (I) and (II) X is H or $CH_3$ and Z methylene, isopropylidene and cyclohexylidene.

3. Thiobisphenol-copolycarbonates according to claim 1, wherein in formulae (I) and (II) X is H and Z is isopropylidene.

European Patent Office

0084578

# EUROPEAN SEARCH REPORT

Application number

EP 82 10 0457.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D,X | US - A - 4 174 359 (P. SIVARAMAKRISHNAN et al.)<br>* column 2, line 35 to column 4, line 51 *<br>-- | 1-3 | C 08 G 63/68<br>C 08 G 63/62 |
| X | FR - A1 - 2 377 267 (BAYER AG)<br>* claim 1; page 3, lines 4 to 20 *<br>& GB - A - 1 592 724<br>& DE - A - 2 701 173<br>---- | 1-3 | |
| | | | TECHNICAL FIELDS SEARCHED (Int.Cl. 3) |
| | | | C 08 G 63/00 |
| | | | CATEGORY OF CITED DOCUMENTS |
| | | | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| X | The present search report has been drawn up for all claims | | &: member of the same patent family, corresponding document |

| Place of search | Date of completion of the search | Examiner |
|---|---|---|
| Berlin | 07-09-1982 | IDEZ |

EPO Form 1503.1 06.78